# EUROPEAN PATENT SPECIFICATION

(11) **EP 1 988 650 B1**
(45) Date of publication and mention of the grant of the patent: **05.09.2012**
(21) Application number: 07290565.6
(22) Date of filing: 04.05.2007
(51) Int. Cl.: H04B 10/12

(54) **Radio over fibre transducer and transmission system**
Radio-über-Faser Umwandler und Übertragungssystem
Transducteur et système de transmission à radio sur fibre

(43) Date of publication of application: 05.11.2008
(73) Proprietor: Mitsubishi Electric R&D Centre Europe B.V., 1119 NS Schiphol Rijk (NL)
(72) Inventor: Payoux, Franck, c/o France Telecom, 92794 Issy Moulineaux Cedex 9 (FR); Meyer, Sylvain, c/o France Telecom, 92794 Issy Moulineaux Cedex 9 (FR); Froc, Guillerm, c/o Mitsubishi Electric ITE, 35708 Rennes Cedex 7 (FR); Paquelet, Stéphane, c/o Mitsubishi Electric ITE, 35708 Rennes Cedex 7 (FR)
(74) Representative: Maillet, Alain

(56) References cited:
- EP-A- 1 480 349
- EP-A1- 1 173 034
- EP-A2- 0 346 925
- US-A1- 2004 266 452

## Description

The invention concerns the architecture of a radio network and more particularly a transparent wired radio frequency conveying system for increasing the range of the radio network in a transparent way and enabling "direct communications" between wireless communication devices.

Radio communication networks are used for a while using lots of different techniques and architectures. The use of radio transmission implies using a communication channel subject to a lot of artifacts. The power of the received signal decreases rapidly with the distance. Communication is subject to interference, fading, and interaction with a moving environment leading to area with poor radio reception capabilities. When the aim is to build a communication network allowing communication between wireless communication devices several architectures have been experimented. Wireless communication devices comprise, for example, mobile phones, laptop computers, personal digital assistants and any kind of wireless devices.

One of these solutions consists of pervasive and ubiquitous networks like those contemplated in the framework of UWB (Ultra Wide Band). In these networks any terminal should be in line of sight of any other in order to allow a direct communication to be established between any two terminals. One of the drawbacks of these networks is the range. Typically the UWB communication has a range about 10 meters, meaning that such network is limited to a communication area of about these 10 meters. All the terminals belonging to the network should lie in this tiny area.

One of the most used solution today is based on cells defined by an Access Point (in case of wireless networks like WiFi) or a base station (in case of cellular networks like GSM, UMTS), and the geographic area around it where radio transmission is possible with the Access Point (base Station), said Access Points (base stations) belonging to different areas and being connected together by wire. With this solution some base stations are spread in the area where wireless communication devices, (mobile phones, PDA, notebook), should be able to communicate with each other via the base station. In order to allow a given wireless communication device to communicate with another remote wireless communication device, several solutions have been proposed. In a cellular network, the communication is first established by a first wireless communication device with a base station close to it. The base station demodulates the signal and remodulates it in another format in order to send it to a Radio network Controller (RNC) through a fiber or copper link. The RNC connects several base stations with point to point links and has a routing function to route the signal to the right base station. The communication is thus relayed to a second base station close to the destination wireless communication device. The communication is then finally established between the second base station and the destination wireless communication device. This solution needs complex base stations and Radio Network Controller, with a management of the routing of the communication to locate, set up communications and follow the wireless communication devices.

In the same manner different WiFi disjoint covered areas can be connected together by wired links or networks comprising gateway equipments with routing capabilities.

A second solution has been proposed to simplify base stations and to increase the coverage of a base station by using optical links and Radio over Fiber technique. In such a solution, the base station is replaced by a simple transducer and all the signal processing (modulation, demodulation) is done in the Radio Network Controller. In an another embodiment, an additional fiber link is added to the classical base station to deport an antenna and thus to increase the radio coverage of the base station. These solutions are also valid for wireless networks. The problem is that all communications go through a central node where an equipment processes these communications to link two wireless communication devices.

Document EP 0 346 925 A2 discloses a communication system using in a first embodiment 2 repeaters linked by an optical fiber to transmit radio signals between two different areas.

Document US 2004/0266452 A1 discloses a system using optical fibers to transmit signals between UWB networks.

To overcome these problems the invention proposes a transparent wired RF conveying system, which allows the connection of a plurality of distant communication areas as if they were close together. With the invention, every wireless communication device in one of these communication areas is able to communicate with any other wireless communication devices in these communication areas as if it were in direct line of sight.

The invention concerns a radio frequency conveying system, comprising, in a first communication area, transparent transduction means for generating an optical signal from a first radio frequency signal received in this first communication area, optical passive transmission means for directly transporting said generated optical signal from the first communication area to at least a second communication area, in the second communication area, transparent transduction means for performing a transformation of the transported optical signal into a second radio frequency signal; and transmission means for transmitting said second radio frequency signal within the second communication area.

The system in accordance with the invention is based on a passive optical fiber infrastructure combined with active transparent air/wire transducers. Radio signals are converted into optical signals by air to wire transducers, transmitted by the wire to one, or several, wire to air transducer to be transmitted around. Between these transducers, no active component is required. Using such a system, signals transmitted by a wireless communication device near the first transducer are transparently transmitted to allow a reception by a second wireless communication device close to the second transducer. The wording "transparent" means here that there is only analogue conversion from air to wire or from wire to air and no signaling between transducers and ends devices nor digital RF modulation/demodulation in the wired connecting network. Radio frequency signals are transmitted by the transparent wired RF conveying system in a complete analogue way, no modulation/demodulation are

needed at any stage of the conveying system. As a consequence there is no information retrieval from the RF signal and no medium access control (MAC) handling inside the wired RF conveying technologies. With this conveying system, it is possible to link together different radio communication areas using only the existing radio MAC protocol at the end devices, there is no need for additional MAC protocols for the wired conveying system. This is particularly true and advantageous in pervasive and ubiquitous system consisting of a group of wireless communication devices where all devices should be able to communicate with each others as soon as they detect they are in the radio range.

In centralized networks the optical link and the transducer are used to separate the antenna from the signal processing. A remote antenna and a simplified base station are obtained because all the signal processing is located in the central node. The central node is used to link several communication areas together.

On the contrary, the proposed wired RF conveying system is able to directly connect two distant groups of wireless communication devices. The optical link is used by any of the wireless communication devices of the first group to communicate with any of the wireless communication device of the second group. The use of the wired RF conveying system is completely transparent to the wireless communication devices in the sense that they are unaware of its existence. For the wireless communication devices, the communication takes place exactly as if they were close to each other. The conveying system is used to bring them in line of sight with each-other. On another hand, the wired RF conveying system allows several communications to take place simultaneously through it. The conveying system can be seen as a sort of waveguide extending the range of radio network transparently. With the prior art system, each device of the first group should have been equipped with a remote antenna in the neighborhood of the second group.

Such a system allows an extension of the range of pervasive and ubiquitous networks.

According to a particular embodiment of the invention, the transduction means are bidirectional.

This property is very useful for pervasive and ubiquitous networks which are constituted of a group of wireless communication devices able to communicate with each other.

According to a particular embodiment of the invention, the passive transmission means comprise at least one optical coupler.

According to a particular embodiment of the invention, the radio frequency conveying system comprises transduction means comprising: at least one antenna for receiving and transmitting said radio signals; a photodetector for converting said received optical signal into corresponding radio frequency signals; first amplification means for transmitting the converted radio frequency signals using the antenna; second amplification means for amplifying radio frequency signals received by the antenna, a light source for converting the amplified received radio signals into corresponding said optical signals and a passive optical coupling means for coupling at least two interfaces, said interfaces comprising an optical input port and an optical output port, said passive optical coupling means being arranged in such a way that optical signals received on the input port of any of the interface are transmitted toward said photodetector and to the output ports of all the interfaces, and that the optical signals generated by the light source are transmitted to the output ports of the interfaces.

In this embodiment, said interfaces of said transduction means are connected to said passive transmission means for transporting said generated optical signal from said transparent transduction means to another transparent transduction means.

Using such two interfaces transducers make it possible to set up a transparent distributing wired RF conveying system of an arbitrary number of transducers. Such a network is easy to modify by adding or suppressing transducers. It leads to a bus topology network.

The invention also concerns a radio transducer, comprising at least one antenna to receive and transmit radio signals, a photodetector for converting a received optical signal into corresponding radio frequency signals, first amplification means for transmitting the converted radio frequency signals using the antenna, second amplification means for amplifying radio frequency signals received by the antenna, a light source for converting the amplified received radio signals into corresponding optical signals, passive optical coupling means for coupling at least two interfaces, each interface comprising an optical input port and an optical output port, said passive optical coupling means being arranged in such a way that optical signals received on the input port of any of the interface is transmitted toward said photodetector and to the output ports of all the interfaces, and that optical signals from the light source are transmitted to the output ports of all the interfaces.

Such a transducer allows offering an easy and smooth upgrading solution, it make it to possible to distribute the central optical interconnection hardware in the transducer. In this transducer, only an analogue conversion from air to wire or from wire to air and no digital RF modulation/demodulation is implemented.

According to a particular embodiment of the invention, said passive optical coupling means comprise a set of 2 by I elementary optical couplers.

According to a particular embodiment of the invention, said 2 by 1 elementary optical couplers are asymmetric.

Such couplers are used to improve the energy balance between outputs.

The characteristics of the invention will emerge more clearly from a reading of the following description of an example embodiment, the said description being produced with reference to the accompanying drawings, among which:
Fig. 1 illustrates an electrical to fiber transparent transducer.
Fig. 2 illustrates a fiber to electrical transparent transducer.
Fig. 3 illustrates an embodiment of a bidirectional radio over fiber (RoF) transparent transducer.
Fig. 4 illustrates the communication between two wireless communication devices using an embodiment of the invention.
Fig. 5 illustrates an example of architecture of the transparent wired RF conveying system.
Fig. 6 illustrates another embodiment of a bidirectional radio over fiber (ROF) transparent transducer.
Fig. 7 illustrates another example of architecture of the transparent wired RF conveying system.

Wireless area networks enable pervasive and ubiquitous private local area networks (LAN). In this document the wording pervasive and ubiquitous means a network that gives to all wireless communication devices access to the communication network with about the same quality of service at every point of its coverage area. Said pervasive and ubiquitous wireless private area networks allow, beyond usual LAN applications, powerful mobile user centric applications. However, on the one hand, since high data rates are targeted (beyond 100Mbit/s) and because the ubiquitous and pervasive capabilities of the network are limited due to the existence of shaded areas induced by obstacles like doors or walls, sufficient quality of service on the overall private area can not be guaranteed. Then, a significant transmitted power is required. On the other hand, in order to fairly share the electromagnetic spectrum, from private area to private area and to protect current or future co-located wireless systems for instances, the electromagnetic transmitted power has to be controlled. A way of doing this consists in up bounding the individual electromagnetic transmitted power of each wireless communication device which leads nevertheless to a shortened operation range. This is typically the case while considering ultra-wide band regulation between 3.6 and 10.1 GHz that induces constraints resulting to a link budget that would not allow required data rate for wireless private local area networks beyond 10 meter. Under these constraints the typical range of a point to point wireless communication is less than the typical size of the area corresponding to the targeted environments i.e. home and enterprise environments for instances that are about few 10's m x 10's m with rooms to be covered that may not be adjacent. Moreover, said Pervasive and Ubiquitous Wireless Private Area Network has to be deployed in a flexible way to target low cost deployment and possibly easy and low cost upgrade.

A solution to extend the range of such networks is to find a way to carry the radio signal between two different points without significant loss. An optical fiber could be used to this aim using radio over fibre (RoF) techniques. RoF is an analogue optical link transmitting modulated RF signals. RF modulation is in most cases digital, in any usual form such as PSK, QAM, TCM, OFDM etc. Optical modulation could have in principle also various forms, however, intensity modulation is widely used. These techniques have been used to bring remote antennas to base station and to centralize the signal processing to and from several remote antennas. Radio frequency (RF) signals can be converted to optical signals to be transmitted in an optical fiber allowing transmission over long distance with no significant loss..

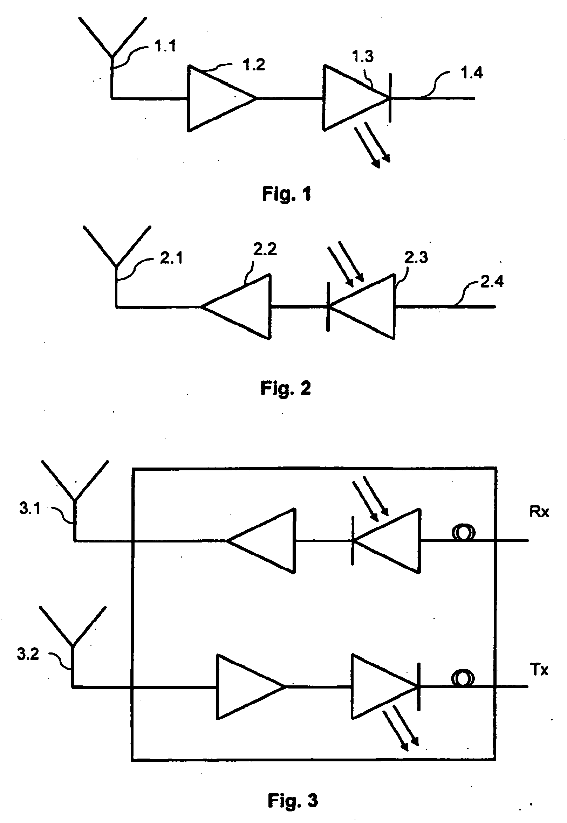

Fig. 1 illustrates a transparent transducer from air to wire. The RF signals received by the antenna 1.1 are transmitted to an amplifier 1.2. Once amplified, the electrical signal is transmitted to a light source, for example a laser diode 1.3 that is in charge of transmitting the corresponding optical signal to be inserted in optical fiber 1.4.
Fig. 2 illustrates the inverse transparent transducer from wire to air. This transducer receives optical signals in the optical fiber 2.4. These signals are transmitted to a photodetector, for example a photodiode 2.3 which transforms them to corresponding RF signals. The RF signals are amplified by the amplifier 2.2 to be transmitted by the antenna 2.1.

As illustrated by Fig. 3, it is possible to couple up a transducer from air to wire to a transducer from wire to air to form a bidirectional transducer air/wire. Such bidirectional transducer can use two antennas 3.1 and 3.2 and offers an optical port consisting of two optical fibers, a first one dedicated to reception of optical signals and noted Rx, a second one dedicated to emission of optical signals and noted Tx. When implementing such bidirectional transducer, the implementation of the two antennas should be made carefully. Coupling between transmission and reception should be avoided. A simple solution is to place the two antennas at a sufficient distance to avoid any coupling, 40 cm should be considered as a good distance. Alternatively, the use of a unique antenna can be contemplated.

A simple transparent wired RF conveying system can be built by simply using two bidirectional transparent transducers as the one illustrated in Fig. 3 connected together by two optical fibers. The Rx input of the first transducer is connected to the Tx output of the second one. The Tx output of the first transducer is connected to the Rx input of the second one. Such a wired RF conveying system is able to transport any RF signal transmitted in the neighborhood of one of the transducers to the neighborhood of the others, transparently, working in both directions. A first wireless communication device being in the neighborhood of the first transducer is able to communicate with a second wireless communication device located in the neighborhood of the second transducer. This property is very useful for pervasive and ubiquitous networks which are constituted of a group of wireless communication devices able to communicate with each other. In the prior art, these networks are then limited by a communication range that could be very short, for instance about 10 meters in the case of UWB (Ultra Wide Band) networks. Using the wired RF conveying system in accordance with the invention allows to link together two disjoint network areas that could be arbitrarily distant as if all the constituting wireless communication devices of these network areas were close together in the same group. Alternatively, it is possible to build a mono-directional transparent wired RF conveying system using only mono-directional transducers in order to offer only an input port or an output port. In such a case, it would only be used to transmit RF signals in one direction from a first communication area to a second one but not from the second one to the first one.

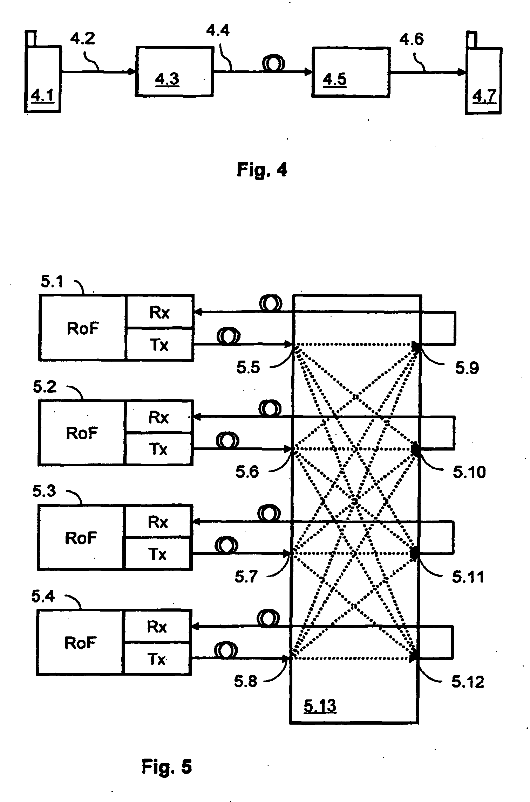

The optical budget is calculated for the system illustrated on Fig. 4. A first wireless communication device 4.1, for instance a mobile phone or a wireless notebook, is communicating through the air to a first bidirectional RoF transducer 4.3. The air communication link 4.2 is considered to be 10 meter maximum as we consider the UWB system. The air to wire transducer 4.3 is using two amplifiers, a first low noise amplifier (LNA) followed by a high power amplifier (HPA) before a laser. The optical signal generated by the laser is then transmitted over the optical fiber 4.4 to a wire to air transducer 4.5. A last air transmission 4.6 is done between the transducer 4.5 and the second wireless communication device 4.7. The loss of the transmission through the air depends on the frequency of the signal:
10 m at 10 GHz results in a loss of 72 dB.
10 m at 5 GHz results in a loss of 66 dB.
10 m at 3 GHz results in a loss of 62 dB.
5 m at 10 GHz results in a loss of 66 dB.
5 m at 5 GHz results in a loss of 60 dB.
5 m at 3 GHz results in a loss of 54 dB.

The following figures are used to calculate the power budget. These values are taken from available commercial components. The gain of the antenna is 7 dB. The LNA used at 10 GHz has a gain of 40 dB for a noise figure of 2.5 dB and a maximum output power of 8 dB. The HPA used at 10 GHz has a gain of 30 dB for a noise figure of 2.5 dB and a maximum output power of 18 dB. The RoF components lead to a loss of 6 dB for a noise figure of 66 dB with a maximum RF power on laser of-3 dB.

Measurements have been performed with a vertical cavity surface emitting laser (VCSEL), a cheap multimode laser. The results obtained show that a bit error rate of 10⁻⁵ at 480 Mbps is obtained with a SNR of 4.66 dB. This means that the system allows a 10 dB optical loss when transmitting over two bonds of 10 meters through the air. A loss of 10 dB allows the insertion of a 8 by 8 optical coupler. This coupler allows the connection of several antennas and therefore the relation of several communication areas. If the distance in the air is reduced to 2 bonds of 5 meters, the optical loss can be almost 12 dB.

Other measurements have been made with a distributed feedback (DFB) laser, which is a single-mode laser operating in the 1280 nm to 1640 nm range, having a high output power (+ 10 dB), but is more expensive than the VCSEL. For two bonds of 10 meters in the air, the allowed optical loss is quite equivalent to the system using a VCSEL of about 12 dB. But when the distance in the air is reduced, the allowed optical loss increases rapidly.

This optical budget shows that the concept of wired RF conveying system can be extended to a distributed wired RF conveying system that connects more than two groups of wireless communication devices. Different topologies can be contemplated. A first one is illustrated Fig. 5. It is based on a N by N passive optical coupler 5.13. This kind of optical coupler is commercially available, like the "single-mode single-window coupler star and tree" offered by the company "Laser 2000". This coupler has, for instance if *N* = 4, 4 inputs 5.5, 5.6, 5.7 and 5.8. Each of these inputs is split passively into 4 outputs 5.9, 5.10, 5.11 and 5.12. Each pair of input/output is connected by optical fiber to a bidirectional transducer 5.1, 5.2, 5.3 and 5.4. Such an architecture leads to a star network interconnecting an arbitrarily chosen number of groups of wireless communication devices, limited to the number *N* of the chosen coupler. This infrastructure is totally transparent and every RF signal transmitted in the neighborhood of one of the transducers is transparently transmitted to all other transducers and transmitted in their neighborhood. These connections are bidirectional allowing radio communication between any two wireless communication devices provided that they are in the neighborhood of one of the transducers. One side of the coupler is dedicated to reception of optical signal while the other side is dedicated to emission. It is to be noted that the interface that has transmitted the signal, also receives it. It could be compared to an echo. When using UWB radio communication it does not hurt as UWB holds a guard period between emission and reception.

New communication areas can be added to the network by connecting new transducers to free branches of the coupler. In case no more free branches are available, the splitting ratio can be modified either by replacing the coupler or by adding additional couplers connected to the main coupler.

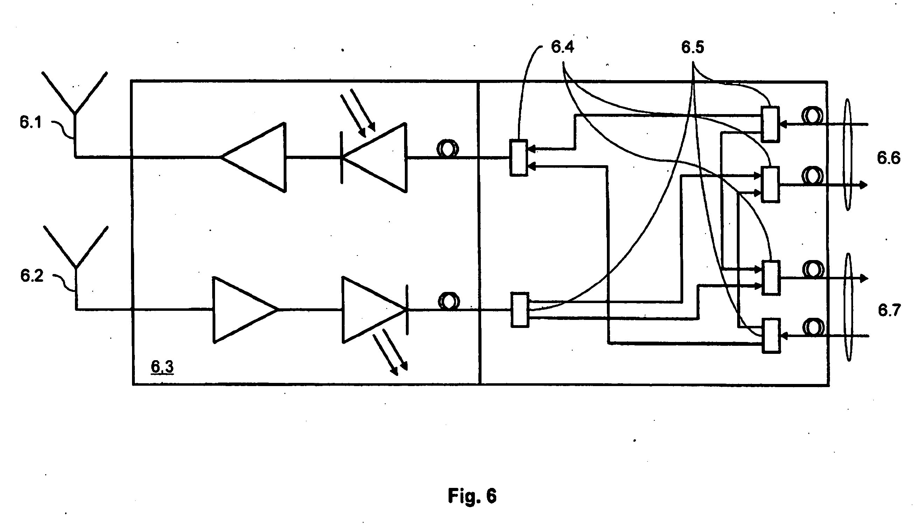

Otherwise, in order to offer an easy and smooth upgrading solution, it is possible to distribute the central optical interconnection hardware in the transducers. To do so, it is proposed a two interfaces transducer comprising two double communication interfaces as illustrated Fig. 6. This transducer takes up the transducer illustrated Fig. 3 in its part 6.3 connected to the antennas 6.1 and 6.2. Thus it comprises also the laser diode and the photodiode component with the amplification means. It implements two optical interfaces 6.6 and 6.7 each of it comprising an optical input port and an optical output port. Between the two interfaces 6.6 and 6.7 and the input and output of the transducer 6.3 a coupler is inserted. This coupler is made of six elementary two by one couplers. Three of them 6.5 are used as splitter having one input and two outputs. Three of them 6.4 are used as combiner having two inputs and one output. These elementary couplers are totally passive. In some embodiments, asymmetric couplers are used, for example 20%-80% or others actual values, are used to improve the energy balance between outputs. Due to this arrangement all signals arriving on any input of one of the interface 6.6 and 6.7 are sent to the transducer 6.3 and to the output of the other interface. All RF signals received by the antenna 6.2 of the transducer 6.3 are transmitted as a corresponding optical signal on the output of the two interfaces 6.6 and 6.7. While described here with two interfaces, the same principles could be applied to build transducer with an arbitrary number of interfaces, where optical signals received on the input port of any of the interfaces are transmitted toward the photodiode and to the output ports of all the interfaces, and where optical signals from the laser diode are transmitted to the output ports of all the interfaces.

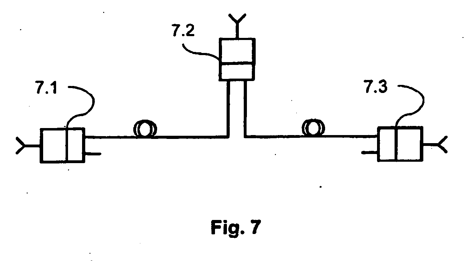

Using such two interfaces transducers, it is possible to set up a transparent distributing wired RF conveying system of an arbitrary number of transducers. Such a network is easy to modify by adding or suppressing transducers. It leads to a bus topology network. Such a network with three transducers is illustrated Fig. 7. A first, second and third transducers 7.1, 7.2 and 7.3 have a first and a second interfaces. The second interface of the first transducer is connected to the first interface of the second transducer 7.2. The second interface of the second transducer is connected to the first interface of the third transducer 7.3.

In this network, any RF signals transmitted in the neighborhood of any antenna of any transducer is transmitted optically to the other transducers and transmitted in their neighborhood. In the star architecture all the optical components used to split the signal to all the transducers are centralized in the central coupler. At the opposite, in the bus architecture these components are distributed in the transducers themselves. The two approaches lead to approximately the same performance.

Such a transparent distributing wired RF conveying system can convey any kind of RF signals. It is thus possible to use this technique for improving the coverage of any RF communication system independently of the actual kind of network used as long as the frequency bandwidth of the system is compatible with the transducers used.

## Claims

1. A radio over fiber transducer (6.3), comprising:
- at least one antenna (6.1, 6.2) for receiving and transmitting radio signals;
- a photodetector (2.3) for converting a received optical signal into corresponding radio frequency signals;
- first amplification means (2.2) for transmitting the converted radio frequency signals using the antenna;
- second amplification means (1.2) for amplifying radio frequency signals received by the antenna;
- a light source (1.3) for converting the amplified received radio signals into corresponding optical signals
**characterized in that** it further comprises:
- passive optical coupling means (6.4, 6.5) for coupling at least two interfaces (6.6, 6.7), each interface comprising an optical input port and an optical output port, said passive optical coupling means being arranged in such a way that optical signals received on the input port of any of the interface are transmitted toward said photodetector and to the output ports of all the interfaces, and that optical signals from the light source are transmitted to the output ports of all the interfaces.

2. A radio transducer according to claim 1, **characterized in that** said passive optical coupling means comprises a set (6.4) of 2 by 1 elementary optical couplers.

3. A radio transducer according to claim 2, **characterized in that** some of said 2 by 1 elementary optical couplers are asymmetric.

4. A radio frequency conveying system comprising:
- in a first communication area, a first radio transducer (7.1) according to claim 1 for generating an optical signal from a first radio frequency signal received in this first communication area;
- optical passive transmission means directly for transporting said generated optical signal from the first communication area to at least a second communication area;
- in the second communication area, a second radio transducer (7.2) according to claim 1 for performing a transformation of said generated optical signal into a second radio frequency signal; and
- transmission means for transmitting said second radio frequency signal within the second communication area.

## Patentansprüche

1. Radio-over-Fiber-(Funk-über-Faser-)Wandler (6.3), der folgendes aufweist:
- wenigstens eine Antenne (6.1, 6.2) zum Empfangen und Senden von Funksignalen;
- einen Photodetektor (2.3) zum Umwandeln eines empfangenen optischen Signals in entsprechende Funkfrequenzsignale;
- eine erste Verstärkungseinrichtung (2.2) zum Senden der umgewandelten Funkfrequenzsignale unter Verwendung der Antenne;
- eine zweite Verstärkungseinrichtung (1.2) zum Verstärken von durch die Antenne empfangenen Funkfrequenzsignalen;
- eine Lichtquelle (1.3) zum Umwandeln der verstärkten empfangenen Funkfrequenzsignale in entsprechende optische Signale,
**dadurch gekennzeichnet, dass** er weiterhin folgendes aufweist:
- eine passive optische Kopplungseinrichtung (6.4, 6.5) zum Koppeln von wenigstens zwei Schnittstellen (6.6, 6.7), wobei jede Schnittstelle ein optisches Eingangsport und ein optisches Ausgangsport aufweist, wobei die passive optische Kopplungseinrichtung auf derartige Weise angeordnet ist, dass an dem Eingangsport von irgendeiner der Schnittstellen empfangene optische Signale in Richtung zu dem Photodetektor und zu den Ausgangsports von all den Schnittstellen gesendet werden und dass optische Signale von der Lichtquelle zu den Ausgangsports von all den Schnittstellen gesendet werden.

2. Funk-Wandler nach Anspruch 1, **dadurch gekennzeichnet, dass** die passive optische Kopplungseinrichtung einen Satz (6.4) von 2 x 1 elementaren optischen Kopplern aufweist.

3. Funk-Wandler nach Anspruch 2, **dadurch gekennzeichnet, dass** einige der 2 x 1 elementaren optischen Koppler asymmetrisch sind.

4. Funkfrequenz-Fördersystem, das folgendes aufweist:
- in einem ersten Kommunikationsbereich einen ersten Funk-Wandler (7.1) nach Anspruch 1 zum Erzeugen eines optischen Signals aus einem in diesem ersten Kommunikationsbereich empfangenen ersten Funkfrequenzsignal;
- eine optische passive Sendeeinrichtung direkt zum Transportieren des erzeugten optischen Signals von dem ersten Kommunikationsbereich zu wenigstens einem zweiten Kommunikationsbereich;
- in dem zweiten Kommunikationsbereich einen zweiten Funk-Wandler (7.2) zum Durchführen einer Transformation des erzeugten optischen Signals in ein zweites Funkfrequenzsignal; und
- eine Sendeeinrichtung zum Senden des zweiten Funkfrequenzsignals innerhalb des zweiten Kommunikationsbereichs.

## Revendications

1. Un transducteur radio sur fibre (6.3), comprenant :
- au moins une antenne (6.1, 6.2) pour la réception et la transmission de signaux radio ;
- un photo détecteur (2,3) pour convertir un signal optique reçu en signaux radiofréquences correspondants ;
- des premiers moyens d'amplification (2,2) pour transmettre avec l'antenne les signaux radiofréquences convertis;
- des seconds moyens d'amplification (1.2) pour amplifier les signaux radiofréquences reçus par l'antenne ;
- une source de lumière (1,3) pour convertir les signaux radiofréquences reçus et amplifiés en signaux optiques correspondants,
**caractérisé en ce qu'**il comporte en outre :
- des moyens de couplage optique passif (6.4, 6.5) pour coupler au moins deux interfaces (6.6, 6.7), chaque interface comprenant un port d'entrée optique et un port de sortie optique, lesdits moyens de couplage optique passif étant arrangés de telle manière que les signaux optiques reçus sur le port d'entrée de n'importe quelle interface sont transmis vers ledit photo détecteur et aux ports de sortie de toutes les interfaces, et **en ce que** les signaux optiques de la source de lumière sont transmis aux ports de sortie de toutes les interfaces.

2. Un transducteur radio selon la revendication 1, caractérisé en qui lesdits moyens de couplage optique passif comprennent un ensemble (6.4) de coupleurs optiques élémentaires de 2 par 1.

3. Un transducteur radio selon la revendication 2, **caractérisé en ce que** certains desdits coupleurs optiques élémentaires de 2 par 1 sont asymétriques.

4. Un système de transmission radiofréquence comprenant :
- dans une première zone de communication, un premier transducteur radio (7.1) selon la revendication 1 pour générer un signal optique d'un premier signal radiofréquence reçu dans cette première zone de communication ;
- des moyens de transmission optique passifs pour transporter directement le signal optique généré de la première zone de communication vers au moins une seconde zone de communication ;
- dans la seconde zone de communication, un second transducteur radio (7.2) selon la revendication 1 pour effectuer une transformation dudit signal optique généré en un second signal radiofréquence ; et
- des moyens de transmission pour transmettre ledit second signal dans la seconde zone de communication.
